Europäisches Patentamt

European Patent Office

Office européen des brevets

(19)

(11) Publication number: **0 263 637 B1**

## EUROPEAN PATENT SPECIFICATION

(45) Date of publication of patent specification: **27.12.91**    (51) Int. Cl.⁵: **B05C 21/00, B05D 1/32**

(21) Application number: **87308653.2**

(22) Date of filing: **30.09.87**

(54) A masking member.

(30) Priority: **30.09.86 JP 149584/86**
**30.09.86 JP 149587/86**
**30.09.86 JP 149582/86**
**27.03.87 JP 46075/87**
**15.04.87 JP 56988/87**

(43) Date of publication of application:
**13.04.88 Bulletin 88/15**

(45) Publication of the grant of the patent:
**27.12.91 Bulletin 91/52**

(84) Designated Contracting States:
**DE FR GB IT SE**

(56) References cited:
**DE-A- 2 611 631**
**US-A- 2 328 203**

(73) Proprietor: **NAGOYA OILCHEMICAL CO., LTD.**
**213-5 Honowari Minamishibata-cho**
**Tokai-shi Aichi(JP)**

(72) Inventor: **Horiki, Seinosuke Nagoya Oilchemical Co. Ltd.**
**213-5 Honowari Minamishibata-cho**
**Tokai Aichi(JP)**
Inventor: **Makino, Reiji Nagoya Oilchemical Co. Ltd.**
**213-5 Honowari Minamishibata-cho**
**Tokai Aichi(JP)**
Inventor: **Ito, Kuninori Nagoya Oilchemical Co. Ltd.**
**213-5 Honowari Minamishibata-cho**
**Tokai Aichi(JP)**

(74) Representative: **Senior, Alan Murray et al**
**J.A. KEMP & CO 14 South Square Gray's Inn**
**London WC1R 5EU(GB)**

## Description

The present invention relates to a masking member used to protect the inside and circumference of a hole such as a water outlet hole, a cable piercing hole and the like from a surface treatment such as coating, plating, phosphatizing, vacuum evaporation and the like. More particularly, the present invention relates to a new masking member consisting of an inserting part having a vessel form consisting of a bottom and a perpendicular wall which extends upwards from the circumference of said bottom, and a flange formed around said inserting part, said masking member made of a thermoplastic foam. In a case where a surface treatment is effected on the surface of an article, said surface of said article often has hole(s) whose inside must be protected from said surface treatment. Said hole(s) may be a water outlet hole, a cable piercing hole, and the like, and a grummet, a plug, a bolt and the like may be inserted into said hole(s).

Hitherto, a masking member of the plug type has been used to protect said hole from a surface treatment. Said masking member may be inserted into a hole of an article to be protected before said surface treatment and, when said surface treatment is effected on the surface of an article, said hole of said masking member is not subjected to said surface treatment. After said surface treatment, said masking member may be removed from said hole of said article. Nevertheless, the resulting film of said surface treatment covers continuously the surface of said article and the surface of said masking member enough to obstruct the smooth removing of said masking member from said hole of said article. Further, in a case where said surface treatment is a coating and said masking member has a taper form, said coating may collect on the surroundings of said hole, namely on the surroundings of said masking member to form a thick part of said coating film on said surroundings of said hole. Said thick part may obstruct a grummet, plug, bolt and the like from fitting tightly to said hole.

Accordingly, an object of the present invention is to save trouble when the masking member is removed from said hole(s) of an article, the inside of which is necessary to be protected from a surface treatment.

According to this invention there is provided a masking member for use in protecting the inside of a hole from a surface treatment of the body surface in which the hole is formed, the masking member consisting of an inserting part having a vessel form consisting of a bottom and a wall which extends upwards from the circumference of said bottom, and a flange formed around said inserting part, said masking member being made of a thermoplastic foam.

The invention also provides the use in protecting the inside of a hole from a surface treatment of the body surface in which the hole is formed of such a masking member.

The invention also provides a method of protecting the inside of a hole from a surface treatment of the body surface in which the hole is formed by mounting into the hole a masking member consisting of an inserting part having a vessel form consisting of a bottom and a wall which extends upwards from the circumference of said bottom, and a flange formed around said inserting part, said masking member being made of a thermoplastic foam.

The invention also provides a method of surface treatment of a body surface having a hole therein wherein there is inserted into the hole a masking member consisting of an inserting part having a vessel form consisting of a bottom and a wall which extends upwards from the circumference of said bottom, and a flange formed around said inserting part, said masking member being made of a thermoplastic foam, the surface treatment is performed and the masking member removed.

The masking member of the invention may be easily removed from the hole of an article and a grummet, plug, bolt and the like may fit tightly to the hole of the article without looseness. Thus the methods of the invention may be easily performed.

The masking member may be made of a thermoplastic foam such as polystyrene foam, polyethylene foam, polypropylene foam and the like and said masking member may be colored by (a) suitable color(s) if desired, for the purpose of selection of the specified masking member according to the hole into which it is to be inserted. A masking member made of polystyrene foam may be one of the most suitable masking members of the present invention.

The invention will be better understood from the following description of exemplary embodiments.

Figure 1 is a perspective view of the first embodiment of the present invention.

Figure 2 is a partial side sectional view of the first embodiment of the present invention.

Figure 3 is a partial side sectional view of the first embodiment of the present invention.

Figure 4 is a partial side sectional view of the article including the hole into which a bolt has been inserted.

Figure 5 is a perspective view of the second embodiment of the present invention.

Figure 6 is a partial side sectional view of the second embodiment of the present invention.

Figure 7 is a perspective view of the third embodiment of the present invention.

Figure 8 is a partial side sectional view of the third embodiment of the present invention.

Figure 9 is perspective view of the fourth embodiment of the present invention.

Figure 10 is a partial side sectional view of the fourth embodiment of the present invention.

Figure 11 is a perspective view of the fifth embodiment of the present invention.

Figure 12 is a partial side sectional view of the fifth embodiment of the present invention.

Figure 13 is a side sectional view of the sixth embodiment of the present invention.

Figure 14 is a perspective view of the sixth embodiment of the present invention.

Figure 15 is a side sectional view of the seventh embodiment of the present invention.

Figure 16 is a side sectional view of the eighth embodiment of the present invention.

Figure 17 is a side sectional view of the nineth embodiment of the present invention.

Figure 18 is a perspective view of the tenth embodiment of the present invention.

Figure 19 is a side sectional view of the tenth embodiment of the present invention.

Figure 20 is a side sectional view of the eleventh embodiment of the present invention.

Figure 21 is a perspective view of the twelfth embodiment of the present invention.

Figure 22 is a perspective view of the thirteenth embodiment of the present invention.

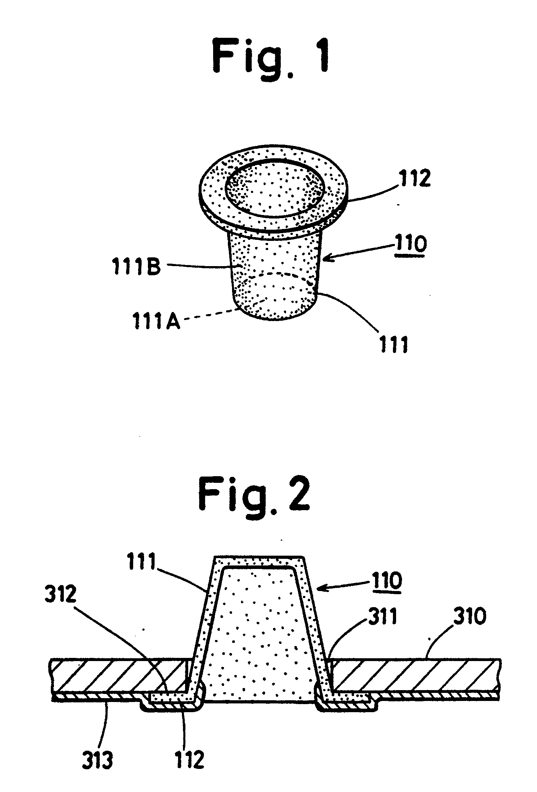

Figure 1 to Figure 4 relate to the first embodiment of the present invention. Refering now to said figures, a masking member (110) consists of an inserting part (111) having a vessel form consisting of a circular bottom (111A) and a wall (111B) which extends upwards from the circumference of said bottom (111A), and a flange (112) which is extended from the upper edge of said wall (111B), said masking member (110) made of a thermoplastic foam. Said inserting part (111) has a taper form decreasing in diameter from the base of said inserting part (111) to the top of said inserting part (111).

When said masking member (110) is used, said masking member (110) protects the inside of a hole (311) of an article (310) by inserting said inserting part (111) into said hole (311) as shown in Fig. 2, and said flange (112) of said masking member (110) covers the surroundings (312) of said hole (311). After which, a surface treatment such as a coating is effected on the surface of said article (310) to form a film (313) of said surface treatment and the inside and surroundings of said hole (311) are not subjected to said surface treatment. After said surface treatment, said masking member may be removed from said hole (311) by hand, hook, and the like. Said masking member (110) can be also removed from said hole (311) by heating at a temperature higher than the softening point of said thermoplastic foam. When said masking member (110) is heated to a temperature higher than the softening point of the thermoplastic foam of said masking member, it may be softened and gases such as air, gas of a blowing agent, and the like in the cells of said thermoplastic foam may first expand and so said masking member may also expand and, then, when said gases leave the cells, said masking member (110) may shrink rapidly and remove itself naturally from said hole (311).

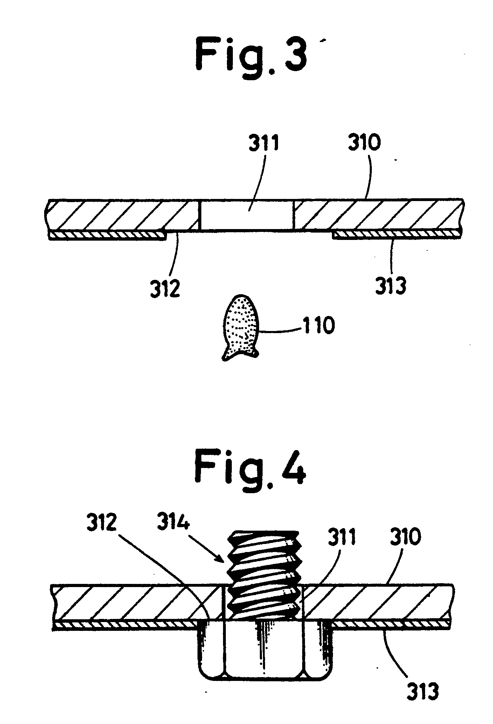

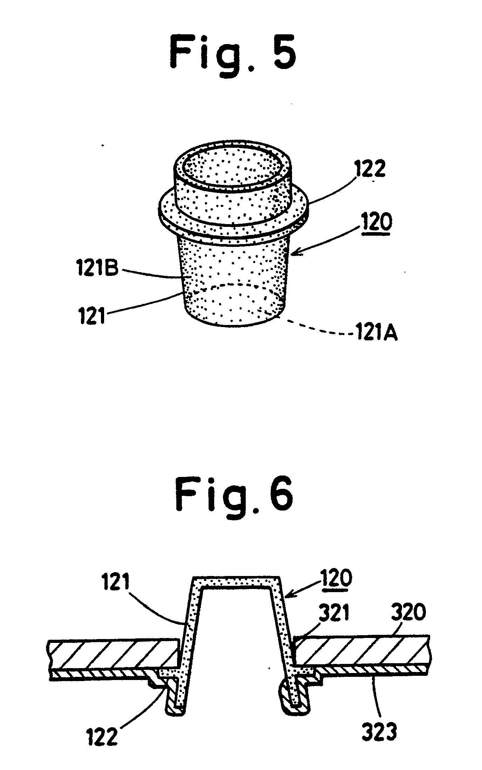

After said masking member (110) is removed from said hole (311), said film (313) has not been formed inside and on said surrounding (312) of said hole (311) as shown in Fig.3 and a bolt (314) may be tightly inserted into said hole (311) as shown in Fig. 4, since there is no thick part of said film (313) of said surface treatment on said surroundings (312) of said hole (311). Further, said masking member (110) can be used for many holes having different diameters since said inserting part (111) of said masking member (110) has a taper form as before mentioned.

Figure 5 and Figure 6 related to the second embodiment of the present invention. In this embodiment, a masking member (120) consists of an inserting part (121) having a vessel form consisting of a circular bottom (121A) and a wall (121B) which extends upwards from the circumference of said bottom (121A) and a flange (122) which is extended from the upper part of said wall (121B). Said inserting part (121) has a taper form decreasing in diameter from the base of said inserting part (121) to the top of said inserting part (121). Said masking member (120) is made of a thermoplastic foam.

Said masking member (120) of this embodiment is used as same as the first embodiment and film (323) of the surface treatment such as coating may be cut by the upper edge of said inserting part (121) as shown in Figure 6, and therefore, said masking member (120) may be smoothly removed from the hole (321) of the article (320) without the obstruction of said film (323).

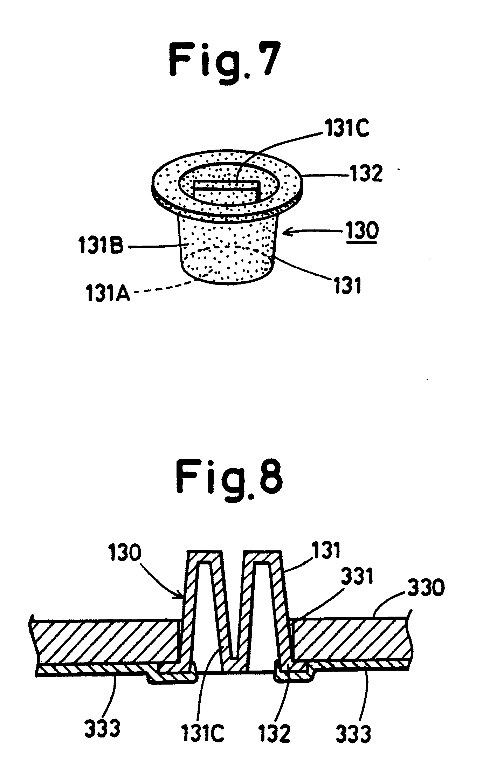

Figure 7 and Figure 8 relate to the third embodiment of the present invention. In this embodiment, a masking member (130) comprises an inserting part (131) having a vessel form consisting of a circular bottom (131A) from which a grip (131C) projects and a wall (131B) which extends upwards from the circumference of said bottom (131A), a flange (132) which is extended from the upper edge of said wall (131B). Said inserting part (131) has a taper form decreasing in diameter from the base of said inserting part (131) to the top of said inserting part (131). Said masking member (130) is made of a thermoplastics foam. The masking member (130) of this embodiment is easily handled by holding said grip (131C) when said masking member (130) is inserted into the hole (331) of the article (330) or removed from the hole (331).

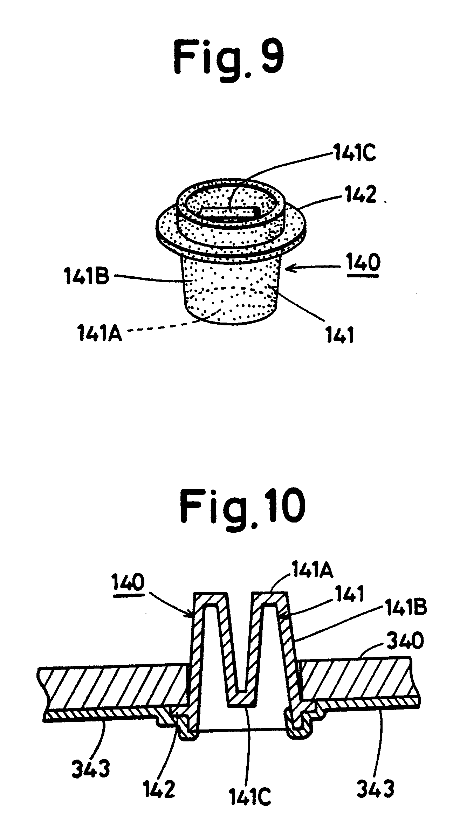

Figure 9 and Figure 10 related to the fourth embodiment of the present invention. In this embodiment, a masking member (140) consists of a inserting part (141) having a vessel form consisting of a circular bottom (141A) from which a grip (141C) is risen and a wall (141B) which extends upwards from the circumference of said bottom (141) and a flange (142) which is extended from the upper part of said wall (141B). Said inserting part (141) has a taper form decreasing in diameter from the base of said inserting part (111) to the top of said inserting part (111). Said masking member (150) is made of a thermoplastic foam.

Said masking member (140) of this embodiment is easily handled by holding said grip (141C) when the masking member (140) is inserted into the hole (341) of the article (340) or removed from the hole (341) as same as the third embodiment of the present invention.

Further, the film (343) of the surface treatment such as coating may be cut by the upper edge of said inserting part (141) the same as the second embodiment as shown in Figure 10 so that said masking member (140) is easily removed from the hole (341) without the obstruction of said film (343).

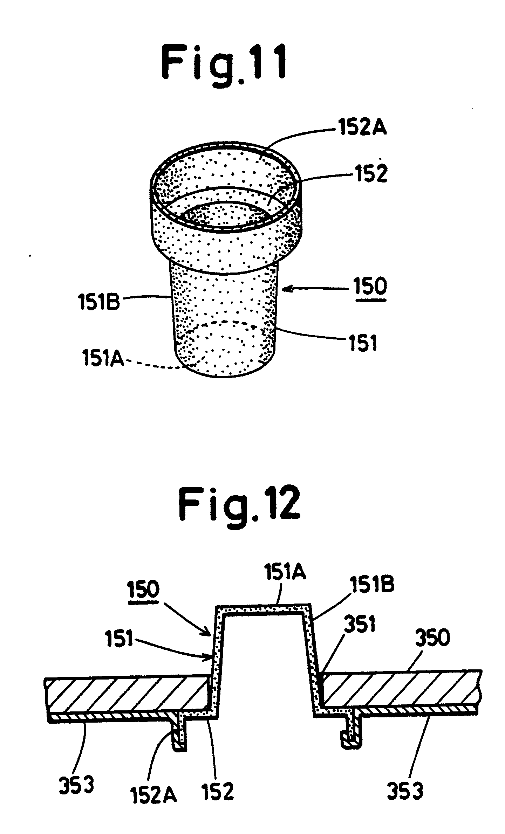

Figure 11 and Figure 12 relate to the fifth embodiment of the present invention. In this embodiment, a masking member (150) consists of an inserting part (151) having a vessel form consisting of a circular bottom (151A) and a wall (151B) which extends upwards from the circumference of said bottom (151A), and a flange (152) which is extended from the upper edge of said wall (151B), and has a perpendicular wall (152A) which extends upwards from the circumference of said flange (152). Said inserting part (111) has a taper form decreasing in diameter from the base of said inserting part (111) to the top of said inserting part (111). Said masking member (150) is made of thermoplastic foam.

Said masking member (150) of this embodiment is used as same as the first, second, third and fourth embodiment, and in this embodiment the film (353) of the surface treatment such as coating may be cut by the edge of said perpendicular wall (151A) as shown in Figure 12, so that said masking member (150) is easily removed from the hole (351) of the article (350) without obstruction of said film (353).

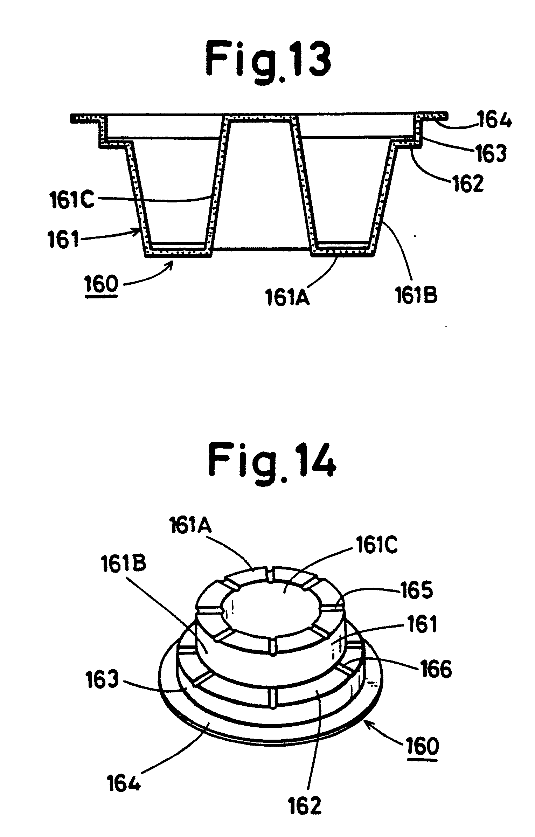

Figure 13 and Figure 14 relate to the sixth embodiment of the present invention. In this embodiment, a masking member (160) consists of an inserting part (161) having a vessel form consisting of a circular bottom (161A) from which a grip (161C) projects and a wall (161B) which extends upwards from the circumference of said bottom (161A), a lower flange (162) which is extended from the upper edge of said wall (161B), a perpendicular wall (163) which extends upwards from the circumference of said lower flange (162), and an upper flange (164) which is extended from the upper edge of said perpendicular wall (163). Plural ribs (165) and (166) are respectively formed on said bottom (161A) of said inserting part (161) and said lower flange (162) to reinforce them. Said inserting part (161) has a taper form decreasing in diameter from the base of said inserting part (161) to the top of said inserting part (161). Said masking member (160) is made of a thermoplastic foam.

Said masking member (160) of this embodiment is easily handled by holding said grip (161C) when said masking member (160) is inserted into the hole of the article or removed from the hole the same as the third and the fourth embodiments and the film of the surface treatment may be more completely cut by said upper flange (164) so that said masking member (160) is more easily removed from the hole within the obstruction of the film.

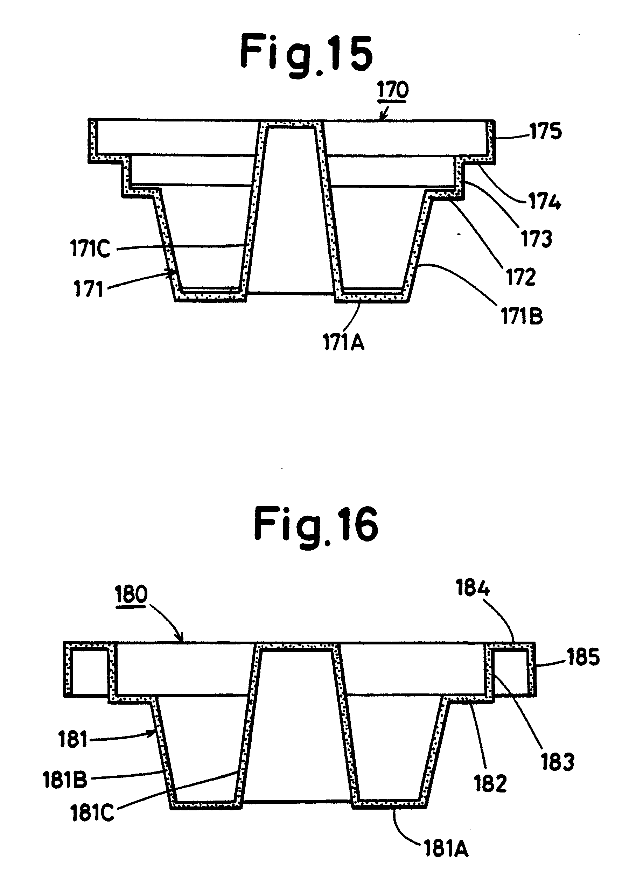

Figure 15 relates to the seventh embodiment of the present invention. In this embodiment, a masking member (170) consists of an inserting part (171) having a vessel form consisting of a circular bottom (171A) from which a grip (171C) projects and a wall (171B) which extends upwards from the circumference of said bottom (171A), a lower flange (172) which is extended from the upper edge of said perpendicular wall (171B), a lower perpendicular wall (173) which extends upwards from the circumference of said lower flange (172), an upper flange (174) which is extended from the upper edge of said perpendicular wall (173), and an upper perpendicular wall (175) which extends upwards from the circumference of said upper flange (174). Plural ribs are respectively formed on said bottom (171A) of said inserting part (171) and said lower flange (172) to reinforce them. Said inserting part (171) has a taper form decreasing in diameter from the base of said inserting part (171) to the top of said inserting part (171). Said masking member (170) is made of a thermoplastic foam.

Said masking member (170) of this embodiment is easily handled by holding said grip (171C) when said masking member (170) is inserted into the hole of the article or removed from the hole the same as the third, the fourth and the sixth embodiments and the film of the surface treatment may be more completely cut by said upper perpendicular wall (175) with said lower flange (172), said lower perpendicular wall (173) and said upper flange (174) than in the case of the sixth embodiment of the present invention so that said masking member (170) is more easily removed from the hole without the obstruction of the film.

Figure 16 relates to the eighth embodiment of the present invention. In this embodiment, a masking member (180) consists of an inserting part (181) having a vessel form consisting of a circular bottom (181A) from which a grip (181C) projects and a wall (181B), an inner perpendicular extends upwards from the circumference of said bottom (181A), a lower flange (182) which is extended from the upper edge of said wall (181B), an inner perpendicular wall (183) which extends upwards from the circumference of said lower flange (182), an upper flange (184) which is extended from the upper edge of said perpendicular wall (184), and an outer perpendicular wall (185) which extends downwards from the circumference of said upper flange (184). Plural ribs are respectively formed on said bottom (181A) of said inserting part (181) and said lower flange (182) to reinforce them. Said inserting part (181) has a taper form decreasing in diameter from the base of said inserting part (181) to the top of said inserting part (181). Said masking member (180) is made of a thermoplastic foam. Said masking member (180) of this embodiment is easily handled by holding said grip (181C) when said masking member (180) is inserted into the hole of the article or removed from the hole as same as the third, the fourth, the sixth and the seventh embodiments and the film of the surface treatment may be more completely cut by said upper flange (184) and said outer perpendicular wall (185) with said lower flange (182) and said inner perpendicular wall (183) than in the case of the sixth embodiment of the present invention so that said masking member (180) is more easily removed from the hole without the obstruction of the film.

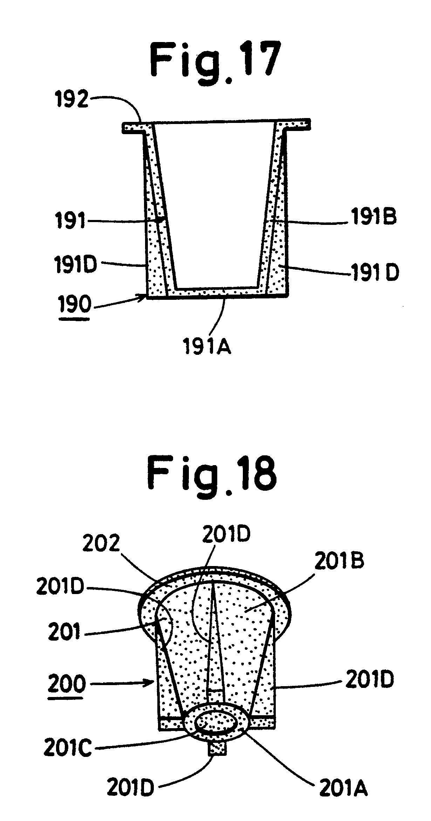

Figure 17 relates to the ninth embodiment of the present invention. In this embodiment a masking member (190) consists of an inserting part (191) having a vessel form consisting of a circular bottom (191A) and a wall (191B) which extends upwards from the circumference of said bottom (191A) and on which plural perpendicular ribs (191D) are formed, and a flange (192) which is extended from the upper edge of said wall (191B). Said inserting part (191) has a taper form decreasing in diameter from the base of said inserting part (191) to the top of said inserting part (191). Said masking member is made of a thermoplastic foam.

In this embodiment, said perpendicular ribs (191D) reinforce said wall (191B) to prevent crushing of said inserting part (191) of said masking member (190) when said masking member (190) is inserted into the hole of the article and said masking member (190) is firmly held in the hole since said perpendicular ribs (191D) of said masking member (190) tightly contact to the inner wall of said hole.

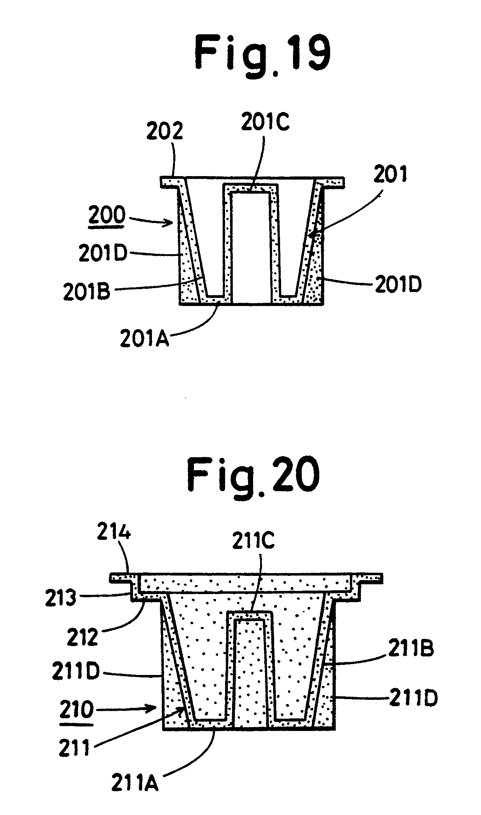

Figure 18 and Figure 19 relate to the tenth embodiment of present invention. In this embodiment, a masking member (200) consists of an inserting part (201) having a vessel form consisting of a circular bottom (201A) from which a grip (201C) projects and a wall (201B) which a extends upwards from the circumference of said bottom (201A) and on which plural perpendicular ribs (201D) are formed, and a flange (202) which is extended from the upper edge of said wall (201B). Said inserting part (201) has a taper form decreasing in diameter from the base of said inserting part (201) to the top of said inserting part (201). Said masking member is made of a thermoplastic foam.

In this embodiment, said perpendicular ribs (201D) reinforce said wall (201B) to prevent crushing of said inserting part (201) of said masking member (200) when said masking member (200) is inserted into the hole of the article and said masking member (200) is firmly held in the hole since said perpendicular ribs (201D) of said masking member (200) tightly contact to the inner wall of said hole. Further, said masking member (200) of this embodiment is easily handled by holding said grip (201C) when said masking member (200) is inserted into the hole.

Figure 20 relates to the eleventh embodiment of the present invention. In this embodiment, a masking member (210) consists of an inserting part (211) having a vessel form consisting of a circular bottom (211A) from which a grip (211C) projects and a wall (211B) which extends upwards from the circumference of said bottom (211A) and on which plural perpendicular ribs (211D) are formed, a lower flange (212) which is extended from the upper edge of said wall (211B), a perpendicular wall (213) which extends upwards from the circumference of said flange (212), and an upper flange (214) which is extended from the upper edge of said perpendicular wall (213). Said inserting part (211) has a taper form decreasing in diameter from the base of said inserting part (211) to the top of said inserting part (211). Said masking member is made of a thermoplastic foam.

In this embodiment, said perpendicular ribs (211D) reinforce said wall (211B) to prevent crushing of said inserting part (211) of said masking member (210) when said masking member (210) is inserted into the hole of the article and said masking member (210) is firmly held in the hole since said perpendicular ribs (211D) of said masking member (210) tightly contact to the inner wall of said hole. Further, said masking member (210) of this embodiment is easily handled by holding said grip (211C) when said masking member (210) is inserted into the hole as same as the eleventh embodiment and the film of the surface treatment may be more completely cut by said upper flange (214) with said lower flange (212) and said perpendicular wall (213) than in the case of the nineth and the tenth embodiments of the present invention so that said masking member (210) is more easily removed from the hole without the obstruction of the film.

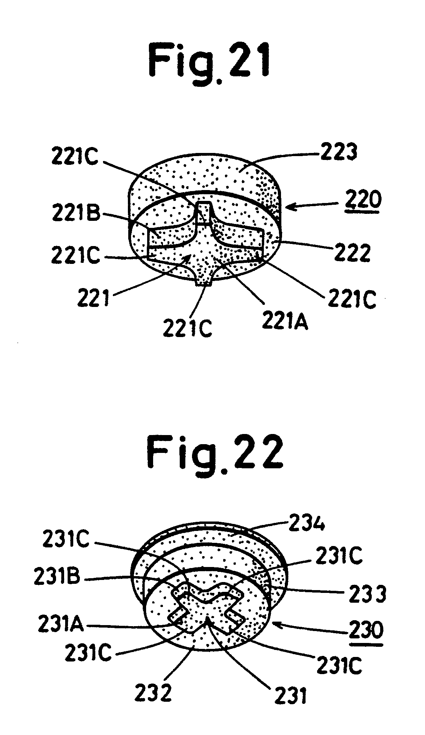

Figure 21 relates to the twelfth embodiment of the present invention. In this embodiment, a masking member (220) consists of an inserting part (221) having vessel form consisting of a cross-shaped bottom (221A) and a perpendicular wall (221B) which extends upwards from the perimeter of said bottom (221A), a flange (222) which is extended from the upper edge of said wall (221B), and a perpendicular wall (223) which extends upwards from the circumference of said flange (222). Said masking member (220) is made of thermoplastic foam.

In this embodiment, said inserting part (221) is reinforced by said cross-shaped bottom (221A) to prevent crushing of said inserting part (221) of said masking member when said masking member (220) is inserted into the hole of the article, and further said masking member (220) is supported in the inner wall of said hole by only partial contacts at the tips (221C) of said inserting part (221) so that removing of said masking member (220) from the hole may be very easy.

Figure 22 relates to the thirteenth embodiment of the present invention. In this embodiment, a masking member (230) consists of an inserting part (231) having vessel form consisting of a cross-shaped bottom (231A) and a perpendicular wall (231B) which extends upwards from the perimeter of said bottom (231A), a lower flange (232) which is extended from the upper edge of said wall (231B), a perpendicular wall (233) which extends upwards from the circumference of said lower flange (232), and an upper flange (234) which is extended from the upper edge of said wall (233). Said masking member (230) is made of thermoplastic foam.

In this embodiment, said inserting part (231) is reinforced by said cross-shaped bottom (231A) to prevent crushing of said inserting part (231) of said masking member when said masking member (230) is inserted into the hole of the article, and further said masking member (230) is supported in the inner wall of said hole by only partially contacts at the tips (231C) of said inserting part (231) so that removing of said masking member (230) from the hole may be very easy. The film of the surface treatment may be more completely cut by said upper flange (234) with said lower flange (232) and said perpendicular wall (233) than in the case of the twelfth embodiment of the present invention.

## Claims

1. A masking member for use in protecting the inside of a hole from a surface treatment of the body surface in which the hole is formed, the masking member consisting of an inserting part having a vessel form consisting of a bottom and a wall which extends upwards from the circumference of said bottom, and a flange formed around said inserting part, said masking member being made of a thermoplastic foam.

2. A masking member of claim 1, wherein said flange extends from the upper edge of said inserting part.

3. A masking member of claim 2, wherein a perpendicular wall extends upwards from the circumference of said flange.

4. A masking member of claim 3, wherein said flange is a lower flange and an upper flange extends from the upper edge of said perpendicular wall.

5. A masking member of claim 4, wherein the first said wall is a lower wall and an upper perpendicular wall extends upwards from the circumference of said upper flange.

6. A masking member of claim 4, wherein the first said wall is an inner wall and an outer perpendicular wall extends downwards from the circumference of said upper flange.

7. A masking member according to any preceding claim wherein said flange extends from the upper part of said perpendicular wall.

8. A masking member according to any preceding claim wherein a grip projects from said inserting part.

9. A masking member according to any preceding claim wherein plural perpendicular ribs are formed on said wall of said inserting part.

10. A masking member according to any preceding claim wherein said bottom of said inserting part is cross shaped.

11. The use in protecting the inside of a hole from a surface treatment of the body surface in which the hole is formed of a masking member according to any preceding claim.

12. A method of protecting the inside of a hole from a surface treatment of the body surface in which the hole is formed by mounting into the hole a masking member consisting of an inserting part having a vessel form consisting of a bottom and a wall which extends upwards from the circumference of said bottom, and a flange formed around said inserting part, said masking member being made of a thermoplastic foam.

13. A method of surface treatment of a body surface having a hole therein wherein there is inserted into the hole a masking member consisting of an inserting part having a vessel form consisting of a bottom and a wall which extends upwards from the circumference of said bottom, and a flange formed around said inserting part, said masking member being made of a thermoplastic foam, the surface treatment is performed and the masking member is removed.

14. A method according to claim 12 or 13 wherein said masking member is a masking member according to any one of claims 2 to 10.

**Revendications**

1. Elément de masquage servant à protéger l'intérieur d'un orifice d'un traitement de surface appliqué à la surface d'un corps dans laquelle l'orifice est formé, l'élément de masquage se composant d'une partie d'insertion ayant la forme d'un récipient comprenant un fond et une paroi qui s'étend vers le haut à partir de la circonférence dudit fond, et d'une bride formée autour de ladite partie d'insertion, ledit élément de masquage étant réalisé en mousse thermoplastique.

2. Elément de masquage selon la revendication 1, dans lequel ladite bride s'étend à partir du bord supérieur de ladite partie d'insertion.

3. Elément de masquage selon la revendication 2, dans lequel une paroi perpendiculaire s'étend vers le haut à partir de la circonférence de ladite bride.

4. Elément de masquage selon la revendication 3, dans lequel ladite bride est une bride inférieure et une bride supérieure s'étend à partir du bord supérieur de ladite paroi perpendiculaire.

5. Elément de masquage selon la revendication 4, dans lequel ladite première paroi est une paroi inférieure et une paroi perpendiculaire supérieure s'étend vers le haut à partir de la circonférence de ladite bride supérieure.

6. Elément de masquage selon la revendication 4, dans lequel ladite première paroi est une paroi interne et une paroi perpendiculaire externe s'étend vers le bas à partir de la circonférence de ladite bride supérieure.

7. Elément de masquage selon l'une quelconque des revendications précédentes, dans lequel ladite bride s'étend à partir de la partie supérieure de ladite paroi perpendiculaire.

8. Elément de masquage selon l'une quelconque des revendications précédentes, dans lequel un élément de préhension fait saillie de ladite partie d'insertion.

9. Elément de masquage selon l'une quelconque des revendications précédentes, dans lequel plusieurs nervures perpendiculaires sont formées sur ladite paroi de ladite partie d'insertion.

10. Elément de masquage selon l'une quelconque des revendications précédentes, dans lequel ledit fond de ladite partie d'insertion a la forme d'une croix.

11. Utilisation d'un élément de masquage selon l'une quelconque des revendications précédentes pour protéger l'intérieur d'un orifice d'un traitement de surface appliqué à la surface d'un corps dans laquelle l'orifice est formé.

12. Procédé servant à protéger l'intérieur d'un orifice d'un traitement de surface appliqué à la surface d'un corps dans laquelle l'orifice est formé, consistant à monter dans l'orifice un élément de masquage se composant d'une partie d'insertion ayant la forme d'un récipient comprenant un fond et une paroi qui s'étend vers le haut à partir de la circonférence dudit fond, et d'une bride formée autour de ladite partie d'insertion, ledit élément de masquage étant réalisé en mousse thermoplastique.

13. Procédé de traitement de la surface d'un corps dans laquelle est formé un orifice, le procédé consistant à insérer dans l'orifice un élément de masquage se composant d'une partie d'insertion ayant la forme d'un récipient comprenant un fond et une paroi qui s'étend vers le haut à partir de la circonférence dudit fond, et d'une bride formée autour de ladite partie d'insertion, ledit élément de masquage étant réalisé en mousse thermoplastique, à effectuer le traitement de surface et à retirer l'élément de masquage.

14. Procédé selon la revendication 12 ou la revendication 13, dans lequel ledit élément de masquage est un élément de masquage selon l'une quelconque des revendications 2 à 10.

**Patentansprüche**

1. Abdeckelement zum Schutz des Inneren eines Lochs bei einer Oberflächenbehandlung der Körperoberfläche, in der das Loch ausgebildet ist, wobei das Abdeckelement ein Einführteil mit Gefäßform aufweist, das einen Boden und eine sich vom Umfang des Bodens aufwärts erstreckende Wand und einen um das Einführteil ausgebildeten Flansch aufweist, und das Abdeckelement aus einem thermoplastischen Schaum hergestellt ist.

2. Abdeckelement nach Anspruch 1, wobei sich der Flansch von der oberen Kante des Einführteils erstreckt.

3. Abdeckelement nach Anspruch 2, wobei sich eine senkrechte Wand vom Umfang des Flansches aufwärts erstreckt.

4. Abdeckelement nach Anspruch 3, wobei der Flansch ein unterer Flansch ist, und sich ein oberer Flansch von der oberen Kante der senkrechten Wand erstreckt.

5. Abdeckelement nach Anspruch 4, wobei die erste Wand eine untere Wand ist und sich eine obere senkrechte Wand vom Umfang des oberen Flansches aufwärts erstreckt.

6. Abdeckelement nach Anspruch 4, wobei die erste Wand eine Innenwand ist und sich eine äußere senkrechte Wand vom Umfang des oberen Flansches nach unten erstreckt.

7. Abdeckelement nach einem der vorstehenden Ansprüche, wobei sich der Flansch vom oberen Teil der senkrechten Wand erstreckt.

8. Abdeckelement nach einem der vorstehenden Ansprüche, wobei ein Griff vom Einführteil vorsteht.

9. Abdeckelement nach einem der vorstehenden Ansprüche, wobei mehrere senkrechte Rippen auf der Wand des Einführteils ausgebildet sind.

10. Abdeckelement nach einem der vorstehenden Ansprüche, wobei der Boden des Einführteils kreuzförmig ist.

11. Schutz eines Loches bei einer Oberflächenbehandlung einer das Loch aufweisenden Körperoberfläche mit einem Abdeckelement nach einem der vorstehenden Ansprüche.

12. Verfahren zum Schutz des Inneren eines Lochs bei einer Oberflächenbehandlung der Körperoberfläche, in der das Loch ausgebildet ist, durch Anordnen eines Abdeckelements in dem Loch, wobei das Abdeckelement ein Einführteil mit Gefäßform aufweist, das aus einem Boden und einer sich vom Umfang des Bodens aufwärts erstreckenden Wand und einem um das Einführteil ausgebildeten Flansch besteht und aus einem thermoplastischen Schaum hergestellt ist.

13. Verfahren zur Oberflächenbehandlung einer Körperoberfläche mit einem darin ausgebildeten Loch, wobei ein Abdeckelement in das Loch eingeführt wird, das ein Einführteil mit Gefäßform aufweist, das aus einem Boden und einer sich vom Umfang des Bodens aufwärts erstreckenden Wand und einem um das Einführteil ausgebildeten Flansch besteht, wobei das Abdeckelement aus einem thermoplastischen Schaum hergestellt ist, die Oberflächenbehandlung durchgeführt und das Abdeckelement entfernt wird.

14. Verfahren nach Anspruch 12 oder 13, wobei das Abdeckelement ein Abdeckelement nach einem der Ansprüche 2 bis 10 ist.

# Fig. 1

# Fig. 2

# Fig.3

311   310

312   313

110

# Fig.4

312   314   311   310

313

# Fig. 5

# Fig. 6

# Fig.7

# Fig.8

# Fig. 9

# Fig. 10

# Fig.11

# Fig.12

# Fig.13

161C
161
160
161A
161B
164
163
162

# Fig.14

161A
161C
161B
165
161
163
166
164
160
162

# Fig.15

# Fig.16

# Fig.17

# Fig.18

# Fig.19

# Fig.20

# Fig.21

# Fig.22